# EUROPÄISCHE PATENTANMELDUNG

(11) **EP 3 148 036 A1**
(43) Veröffentlichungstag der Anmeldung: **29.03.2017**
(21) Anmeldenummer: 15187205.8
(22) Anmeldetag: 28.09.2015
(51) Int. Cl.: H02J 3/32

(54) **ANORDNUNG ZUM SPEICHERN VON ELEKTRISCHER ENERGIE**

(71) Anmelder: AEG Power Solutions GmbH, 59581 Warstein-Belecke (DE)
(72) Erfinder: KEMPEN, Stefan, 59821 Arnsberg (DE); de VIDTS, Gladwyn, 59556 Lippstadt (DE); SCHMITT, Hans, 90469 Nürnberg (DE)
(74) Vertreter: Graefe, Jörg

(57) **Zusammenfassung**

Die vorliegende Erfindung betrifft eine Anordnung zum Speichern von elektrischer Energie aus einem Versorgungsnetz, wobei die Anordnung
- einen Umrichter zum Wandeln von Wechselspannung in Gleichspannung aufweist, wobei der Umrichter
- erste Anschlüsse (11) zur Verbindung des Umrichters mit dem Versorgungsnetz,
- zweite Anschlüsse (12) zur Bereitstellung und/oder Anlegen von Gleichspannung und
- ein Leistungsteil
- mit Leistungshalbleiterbauelementen, das elektrisch zwischen die ersten Anschlüsse und die zweiten Anschlüsse geschaltet ist,
aufweist, und die Anordnung weiter
- eine Energiespeichereinrichtung zur Aufnahme von elektrischer Energie aufweist,
wobei die Anordnung außerdem
eine Energiewandlereinrichtung (4) aufweist, die elektrische Energie in eine Energie anderer Form wandelt, und eine Umschalteinrichtung aufweist, mit welcher entweder die Energiespeichereinrichtung (3) oder die
Energiewandlereinrichtung (4) mit den zweiten Anschlüssen des Umrichters (1) verbindbar ist.

## Beschreibung

Die vorliegende Erfindung betrifft eine Anordnung zum Speichern von elektrischer Energie aus einem Versorgungsnetz, wobei die Anordnung
- einen Umrichter zum Wandeln von Wechselspannung in Gleichspannung aufweist, wobei der Umrichter
- erste Anschlüsse zur Verbindung des Umrichters mit dem Versorgungsnetz,
- zweite Anschlüsse zur Bereitstellung von Gleichspannung und
- ein Leistungsteil mit Leistungshalbleiterbauelementen, das elektrisch zwischen die ersten Anschlüsse und die zweiten Anschlüsse geschaltet ist,
- aufweist, und die Anordnung weiter
- einen Speicher zum Speichern von elektrischer Energie aufweist.

Eine solche Anordnung mit einer Speichereinrichtung mit einem Akkumulator wird auch als Batteriespeichersystem, Grid Energy Storage System, Energy Storage System oder Battery Storage System bezeichnet. Das sind Anlagen, die an Versorgungsnetze angeschlossen werden, um nicht für die Versorgung benötigte elektrische Energie abzuschöpfen und für Zeiten einer hohen Nachfrage und einem geringem Angebot zu speichern, um in solchen Zeiten die gespeicherte Energie in das Versorgungsnetz einzuspeichern.

Eine Wirkleistung, die ein Batteriespeichersystem, ein Kraftwerk oder andere Anordnungen dem Netz zur Verfügung stellen wird, je nachdem wie schnell sie innerhalb einer bestimmten Zeit zur Verfügung gestellt werden, als Primärregelleistung,

Sekundärregelleistung oder Tertiärregelleistung bezeichnet.

Batteriespeichersysteme stellen derzeit Primärregelleistung zur Verfügung. Die Batteriespeichersysteme sind derzeit so ausgelegt, dass die bei voller Ladung (State Of Charge (SOC) = 100%) maximal vom Batteriespeicher zur Verfügung stellbare Leistung doppelt so groß ist wie die dem Versorgungsnetzbetreiber garantierte Primärregelleistung, die innerhalb einer definierten Zeit abgenommen werden kann. Dann kann immer die garantierte Primärregelleistung abgenommen und gespeichert werden. Das macht für die Speicherung einer garantierten Primärregelleistung Batterien notwendig, die sehr groß und entsprechend teuer sind. Den Zustand bei der die Batterie maximal die garantierte Primärregelleistung zur Verfügung stellen kann, also der Zustand bei der Hälfte der maximalen Ladung (SOC = 50%) wird als Neutralzustand bezeichnet.

Warum die bei voller Ladung maximal vom Batteriespeicher zur Verfügung stellbare Leistung doppelt so groß sein sollte wie die garantierte Primärregelleistung, zeigt folgendes Beispiel:
Die garantierte Primärregelleistung beträgt 1 MW. Damit diese garantierte Leistung geliefert werden kann, muss der Speicher mit zumindest dieser garantierten Leistung aufgeladen sein. Damit dann bei bereits erfolgter Speicherung dieser garantierten Leistung die gleiche garantierte Leistung von 1 MW eingespeichert werden kann, muss die maximal vom Batteriespeicher zur Verfügung stellbare Leistung doppelt so sein wie die garantierte Primärregelleistung. Sie beträgt somit 2 MW.

Batterien, die eine so große Leistung abnehmen oder aufbringen können sind sehr teuer.

In den derzeitigen Stromnetzen wird elektrische Energie immer noch überwiegend aus von Turbinen angetriebenen Synchrongeneratoren erzeugt. Ein Überangebot bzw. ein Mangel an elektrischer Wirkleistung macht sich bei Frequenzschwankungen im Netz bemerkbar. Diese Frequenzschwankungen rühren daher, dass bei einem Wirkleistungsmangel die Synchrongeneratoren gebremst und bei einem Überangebot von Wirkleistung die Generatoren entlastet und damit beschleunigt werden. Dem Bremsen und dem Beschleunigen wirkt die große Massenträgheit der rotierenden Teile der Generatoren und der ggf. damit gekoppelten Turbinen entgegen. Kurzfristige Wirkleistungsschwankungen werden daher durch die in der rotierenden Masse gespeicherte kinetische Energie ausgeglichen. Wenn die Abweichung der Netzfrequenz kleiner als 10 mHz ist, erfolgt abhängig von der verwendeten Primärregelvorhaltung keine Aktivierung der Primärregelung.

Das bedeutet, dass es einen Bereich um die Nennfrequenz gibt (Unempfindlichkeitsbereich) in dem keine Regelung erfolgt. Innerhalb dieses Bereichs erfolgt derzeit der Ausgleich zwischen Stromerzeugung und Stromnachfrage ausschließlich über die Trägheiten im Stromsystem, insbesondere durch die kinetische Energie der rotierenden Teile der verwendeten Maschinen. Die Fähigkeit eines Stromsystems, Schwankungen durch Trägheit abzudecken wird auch als Momentanreserve bezeichnet.

Da im Stromnetz zunehmend rotierende Maschinen zur Stromerzeugung durch leistungselektronische Methoden der Netzstromerzeugung ersetzt werden, zum Beispiel durch Fotovoltaikkraftwerke, wird die Momentanreserve kleiner und kleiner. Es muss also eine Möglichkeit geschaffen werden momentane Leistungsschwankungen auszugleichen. Die dafür notwendige Regelleistung wird gelegentlich als Momentanregelleistung bezeichnet. Da Batteriespeichersysteme schnell elektrische Leistung zur Verfügung stellen können, wird es in Zukunft einen vermehrten Bedarf an kostengünstigen Batteriespeichersystemen geben.

Hier setzt die Erfindung an.

Der Erfindung liegt das Problem zugrunde Anordnungen der eingangs genannten Art so fortzuentwickeln, dass kleinere Energiespeicher benutzt werden können.

Dieses Problem wird erfindungsgemäß dadurch gelöst, dass die Anordnung
- eine Energiewandlereinrichtung, insbesondere einen Wärmeerzeuger, aufweist, der elektrische Energie in eine von elektrischer Energie verschiedene Energieform, insbesondere Wärmeenergie wandelt, und
- eine Umschalteinrichtung aufweist, mit welcher entweder der Energiespeichereinrichtung oder der Energiewandlereinrichtung mit den zweiten Anschlüssen des Umrichters verbindbar ist.

Bei der erfindungsgemäßen Anordnung kann auch eine Energiewandlereinrichtung genutzt werden, um Energie aus dem Versorgungsnetz zu entnehmen. Die aus dem Netz entnommene Energie kann dann einer anderen Nutzung als im Stromnetz zugeführt werden. Die Energiewandlereinrichtung kann alternativ zur Energiespeichereinrichtung über den Umrichter mit dem Netz verbunden werden. Das hat den Vorteil, dass Energie die aus dem Netz entnommen werden soll und die nicht mehr von der Energiespeichereinrichtung aufgenommen werden kann, durch die Energiewandlereinrichtung in eine Energie anderer Form gewandelt werden kann und einer sofortigen oder späteren Nutzung zugeführt werden kann. Diese Energie kann dann genutzt werden, zum Beispiel als Prozesswärme in Produktionsanlagen, zur Heizung von Gebäuden oder zur Langzeitspeicherung von Wärmeenergie. Die andere Energieform kann, muss aber nicht Wärmeenergie sein. Ebenso ist die Wandlung in chemische Energie (z.B. Power-to-Gas, Elektrolyse) oder mechanische Energie (z. B. kinetische oder potentielle Energie) oder weitere Energieformen möglich.

Vorzugsweise weist die erfindungsgemäße Anordnung einen Verbraucher auf, in dem die Energie aus der anderen Energieform in einem Prozess genutzt wird.

Das Entnehmen elektrischer Energie aus einem Versorgungsnetz und das Wandeln der entnommenen elektrischen Energie in Wärme ist unter dem Schlagwort Power-to-Heat bekannt geworden. Derzeit werden Anordnungen mit Batteriespeichern und Power-to-Heat-Anordnungen unabhängig voneinander an Versorgungsnetze angeschlossen.

Außerdem ist es bekannt, dass bei Windkraftanlagen, also einem Kraftwerk, in Zeiten eines Überangebotes von elektrischer Energie die von einer Windkraftanlage erzeugte Energie nicht oder nicht ganz in das Versorgungsnetz eingespeist wird, sondern die erzeugte elektrische Energie oder Teile davon über Lastwiderstände in Wärme umgewandelt wird, die nutzlos bleibt. Das ist nicht effektiv.

Die Kombination einer Einrichtung mit einem Speicher und einer Einrichtung zur Wandlung der Energie in einer erfindungsgemäßen Anordnung bietet dagegen Vorteile:
So kann für die Speicherung und das Bereitstellen von aus dem Netz in dem Speicher gespeicherter elektrischer Energie ein kleinerer Speicher verwendet werden. Es ist ausreichend, wenn die Nennkapazität des Speichers halb so groß ist, wie bei einer bekannten Anordnung der eingangs genannten Art, was deutliche Kostenvorteile bietet. In Anknüpfung an das zuvor gebrachte Beispiel wird von der erfindungsgemäßen Anordnung davon ausgegangen, dass diese wie im vorstehenden Beispiel eine garantierte Primärregeleistung von 1 MW abnehmen bzw. liefern soll. Hat der Speicher der erfindungsgemäßen Anordnung dann nur die halbe Nennkapazität des Speichers der Anordnung aus dem vorstehenden Beispiel, kann die Anordnung bei voller Ladung des Speichers - was der halben Ladung des Speichers der Anordnung im vorstehenden Beispiel entspricht - die garantierte Primärregelleistung aus dem Versorgungsnetz abnehmen und über die Energiewandlereinrichtung z. B. in Wärme wandeln. Im gleichen Ladungszustand kann die Anordnung die garantierte Primärregelleistung bereitstellen, in dem der Speicher der Energiespeichereinrichtung entladen wird. Im Neutralzustand der Energiespeichereinrichtung, in dem die garantierte Primärregelleistung zur Verfügung gestellt werden kann, ist ein Speicher der Energiespeichereinrichtung, zum Beispiel eine Batterie vollständig geladen (SOC = 100%).

Durch die Reduzierung der Größe der Batterien können die Investitionskosten deutlich reduziert werden. Da die Kosten für die Batterie einen erheblichen Teil der gesamten Investitionskosten betragen, werden die gesamten Kosten für die Energiespeichereinrichtung einer erfindungsgemäßen Anordnung deutlich unter den Investitionskosten für ein herkömmliches Batteriespeichersystem betragen.

Weitere Vorteile ergeben sich aus der Topologie der erfindungsgemäßen Anordnung. Für eine einfache Kombination einer Anordnung mit einem Speicher und einer Power-to-Heat-Anordnung wäre es nicht notwendig gewesen, den Wärmeerzeuger und den Speicher über einen gemeinsamen Umrichter mit dem Versorgungsnetz zu Verbinden. Eine einfache Kombination der beiden Technologien hätte man erreichen können, wenn man Leistungsteile herkömmlicher, bewährter Anordnungen parallel geschaltet an das Versorgungsnetz anschließt und steuerungstechnisch miteinander verknüpft. Diesen Weg haben die Erfinder bewusst nicht gewählt.

Stattdessen haben sie die erfindungsgemäße Topologie gewählt, bei dem die Energiespeichereinrichtung und die Energiewandlereinrichtung wechselweise über die Umschalteinrichtung und den Umrichter mit dem Versorgungsnetz verbunden sind. Dadurch können Leistungssteller entfallen, über die z. B. Wärmeerzeuger üblicherweise mit einem Versorgungsnetz verbunden sind.

Erfindungsgemäß ist es möglich mit einer Energiewandlereinrichtung elektrische Energie schnell in eine andere Energieform umzuwandeln. Eine Energiewandlereinrichtung kann so gestaltet sein, dass sie aus einem Netz nicht nur eine Primärregelleistung sondern alternativ oder auch eine Momentanregelleistung abnehmen kann. Die Abnahme von Energie aus dem Netz kann in weniger als 30 Sekunden erfolgen. Das ist ausreichend, um eine Primärregelleistung zur Verfügung zu stellen. Vorzugsweise wird schon in deutlich kürzerer Zeit Energie aus dem Netz abgenommen, zum Beispiel schon innerhalb von 5 Sekunden. Soll durch eine erfindungsgemäße Anordnung eine Momentanregelleistung bereitgestellt werden, ist eine Abnahme auch innerhalb von 20 µS möglich.

Eine Energiewandlereinrichtung einer erfindungsgemäßen Anordnung kann geeignet und eingerichtet sein, auch Energie aus der anderen Energieform in elektrische Energie zu wandeln. Vorzugsweise wird die Energie in der anderen Energieform zuvor gespeichert. Die so gewonnene elektrische Energie kann dann zeitversetzt genutzt werden. Die erfindungsgemäße Anordnung ist vorzugsweise so eingerichtet, dass die Wandlung der elektrischen Energie in Energie der anderen Energieform vorzugsweise schneller erfolgt als die Wandlung der Energie der anderen Energieform in elektrische Energie.

Alternativ kann die erfindungsgemäße Anordnung auch so gestaltet sein, dass eine Wandlung aus der anderen Energieform in elektrische Energie nicht möglich ist.

Eine erfindungsgemäße Anordnung kann so gestaltet sein, dass die Energiewandlereinrichtung in der Lage ist schneller elektrische Energie aufzunehmen als die Energiespeichereinrichtung. Umgekehrt ist es möglich, dass eine erfindungsgemäße Anordnung so gestaltet sein kann, dass die Energiespeichereinrichtung in der Lage ist schneller elektrische Energie abzugeben als die Energiewandlereinrichtung.

Ein weiterer Vorteil ergibt sich, wenn die Umschalteinrichtung als Umschalter Schütze hat. Schütze haben gegenüber leistungselektronischen Schaltern den Vorteil, dass sie preiswert beschafft werden können. Zwar haben preiswerte Schütze den Nachteil, dass sie in der Regel nicht unter Last geschaltet werden können oder sollen. Dieser Nachteil ist bei der für die erfindungsgemäße gewählte Anordnung ohne Bedeutung.

Werden Schütze in der Umschalteinrichtung verwendet, können diese mittels des Umrichters stromlos geschaltet werden. Das gelingt sehr einfach beispielsweise durch das Sperren einer Ausgabe von Zündimpulsen an die im Leistungsteil des Umrichters verwendeten Leistungshalbleiterbauelemente (Impulssperre). Ist die Ausgabe von Zündimpulsen gesperrt, werden die Leistungshalbleiterbauelemente im Umrichter nicht mehr leitend geschaltet und ein Strom durch die Umschalteinrichtung erlischt. Die Schütze der Umschalteinrichtung können dann stromlos geschaltet werden.

Als Leistungshalbleiterbauelemente können für das Leistungsteil des Umrichters Thyristoren, IGBT, Leistungs-MOSFETs und/oder andere geeignete Leistungshalbleiterbauelemente verwendet werden.

Alternativ zu Schützen können auch Leistungshalbleiterbauelemente in der Umschalteinrichtung verwendet werden, wenn kleinere Umschaltzeiten erreicht werden sollen. Das kann insbesondere interessant sein, wenn mit der erfindungsgemäßen Anordnung eine Momentanregelleistung garantiert werden soll. Als Leistungshalbleiterbauelemente können für das Leistungsteil des Umrichters Thyristoren, IGBT, Leistungs-MOSFETs und/oder andere geeignete Leistungshalbleiterbauelemente verwendet werden.

Eine erfindungsgemäße Anordnung kann ein oder mehrere Mittel zur Überwachung der Netzfrequenz der an den ersten Anschlüssen anliegenden Netzspannung aufweisen. Aus der Netzfrequenz und insbesondere der Abweichung der Netzfrequenz von einer Nennfrequenz kann man bekanntlich ablesen, ob aktuell im Versorgungsnetz mehr Energie zum Erreichen der Nennnetzfrequenz benötigt wird, als eingespeist wird, oder ob im Netz ein Überangebot an Energie vorliegt, also zu viel Energie eingespeist wird. Die über das oder die Mittel zur Überwachung der Netzfrequenz gewonnenen Informationen können dazu genutzt werden zu bestimmen, ob der Umrichter als Gleichrichter oder Wechselrichter, also zum Entnehmen von Energie aus dem Netz oder zum Einspeisen von Energie in das Netz genutzt werden soll.

Eine erfindungsgemäße Anordnung kann eine zentrale Steuerung zum Steuern des Umrichters, der Umschalteinrichtung der Energiespeichereinrichtung und/oder der Energiewandlereinrichtung aufweisen. Es ist also möglich, dass in der zentralen Steuerung Steuerungsfunktionen für alle zu steuernden Einrichtungen der Anordnung integriert sind. Eine Steuerung im Sinne dieser Anmeldung umfasst auch Regelungen mit geschlossenen Regelkreisen.

Ergänzend zur zentralen Steuerung kann eine erfindungsgemäße Anordnung dezentrale Steuerungen aufweisen, die dem Umrichter, der Umschalteinrichtung, der Energiespeichereinrichtung und/oder der Energiewandlereinrichtung zugeordnet und ggf. der zentralen Steuerung nachgeordnet sind und ggf. zum Austausch von Informationen über Signalleitungen mit der zentralen Steuerung, dem Umrichter, der Umschalteinrichtung, der Energiespeichereinrichtung und/oder der Energiewandlereinrichtung verbunden sind.

Ebenso ist es möglich, dass die Anordnung dezentrale Steuerungen aufweist, die dem Umrichter, der Umschalteinrichtung, der Energiespeichereinrichtung und/oder der Energiewandlereinrichtung zugeordnet und zum Austausch von Informationen über Signalleitungen miteinander und mit dem Umrichter, der Umschalteinrichtung und/oder dem Speicher verbunden sind.

Sind dezentrale Steuerungen vorgesehen, können diese dezentralen Steuerungen in die Einrichtungen integriert sein, denen sie zugeordnet sind.

Es ist möglich, dass mittels der zentralen Steuerung und/oder der dem Umrichter zugeordneten dezentralen Steuerung ein Signal zum Steuern der Leistungshalbleiterbauelemente des Umrichters erzeugbar ist. Diese können über elektronische Baugruppen, wie zum Beispiel Zündimpulserzeuger an die Leistungshalbleiterbauelemente gegeben werden.

Es ist ebenso möglich, dass mittels der zentralen Steuerung und/oder der der Energiespeichereinrichtung zugeordneten dezentralen Steuerung ein Lade- oder Entladevorgang von Speicherzellen und/oder Speicherblöcken der Energiespeichereinrichtung steuerbar ist.

Es ist ferner möglich, dass mittels der zentralen Steuerung und/oder der der Umschalteinrichtung zugeordneten dezentralen Steuerung die Stellung des oder der Umschalter steuerbar ist.

Eine erfindungsgemäße Anordnung kann so gestaltet sein, dass das zumindest eine Mittel zur Überwachung der Netzfrequenz mit der zentralen Steuerung und/oder einer der dezentralen Steuerungen verbunden ist, um Informationen auszutauschen. Insbesondere kann die aktuelle Netzfrequenz oder die Abweichung von der Netzfrequenz von dem Mittel zur Überwachung an die zentrale oder die dezentralen Steuerungen übermittelt werden.

Es ist möglich, dass die erfindungsgemäße Anordnung eine Schnittstelle hat, über welche eine Anweisung in die Anordnung eingelesen werden kann, die vorgibt, ob die Anordnung Energie aus dem Netz entnehmen soll oder dem Netz zur Verfügung stellen, also einspeisen soll. Es ist möglich, dass die Anordnung über diese Schnittstelle ferngesteuert wird, zum Beispiel von einem Netzbetreiber.

Eine Energiespeichereinrichtung einer erfindungsgemäßen Anordnung kann einen Akkumulator aufweisen.

Eine Energiewandlereinrichtung einer erfindungsgemäßen Anordnung kann einen Elektrolyser oder ein elektrisches Heizelement aufweisen.

Das der Erfindung zu Grunde liegende Problem wird auch durch ein Verfahren zum Betreiben einer erfindungsgemäßen Anordnung gelöst,
- bei dem das zumindest eine Mittel einen Zustand anzeigt, in dem die Netzfrequenz höher oder niedriger als eine Nennfrequenz ist, oder bei dem über eine Schnittstelle die Anordnung zum Einspeisen von elektrischer Energie in das Netz oder zum Entnehmen elektrischer Energie aus dem Netz angewiesen wird,
- wobei bei einer Netzfrequenz höher als der Nennfrequenz oder bei einer Anweisung zum Entnehmen elektrischer Energie der Umrichter - möglicherweise von der zentralen Steuerung oder der dezentralen Steuerung des Umrichter - in einen Gleichrichterbetrieb gebracht wird, in dem Energie von den ersten Anschlüssen zu den zweiten Anschlüssen des Umrichters transportiert wird,
- wobei im Gleichrichterbetrieb des Umrichters bei einem Ladezustand des Speichers unterhalb eines Neutralzustands die zu den zweiten Anschlüssen transportierte Energie in der Energiespeichereinrichtung (3) aufgenommen wird,
- wobei im Gleichrichterbetrieb des Umrichters bei Erreichen des Neutralzustands der Energiespeichereinrichtung die Umschalteinrichtung die zweiten Anschlüsse des Umrichters von der Energiespeichereinrichtung trennt und mit der Energiewandlereinrichtung verbindet und/oder
- falls die zweiten Anschlüsse mit der Energiewandlereinrichtung verbunden sind, die Umschalteinrichtung bei einem Übergang des Umrichters vom Gleichrichterbetrieb in den Wechselrichterbetrieb die zweiten Anschlüsse des Umrichters von der Energiewandlereinrichtung trennt und mit der Energiespeichereinrichtung verbindet.

Erfindungsgemäß kann im Gleichrichterbetrieb nach dem Erreichen des Neutralzustandes der Energiespeichereinrichtung und vor dem Trennen der zweiten Anschlüsse des Umrichters von der Energiespeichereinrichtung und dem Verbinden der zweiten Anschlüsse des Umrichters mit der Energiewandlereinrichtung ein Stromfluss durch die Leistungshalbleiterbauelemente unterbrochen werden, um die Umschalteinrichtung stromlos zu schalten.

Bei einem erfindungsgemäßen Verfahren kann beim Übergang des Umrichters vom Gleichrichterbetrieb in den Wechselrichterbetrieb vor dem Trennen der zweiten Anschlüsse des Umrichters von der Energiewandlereinrichtung und dem Verbinden der zweiten Anschlüsse des Umrichters mit dem der Energiespeichereinrichtung ein Stromfluss durch die Leistungshalbleiterbauelemente unterbrochen werden, um die Umschalteinrichtung stromlos zu schalten. Das kann zum Beispiel durch eine sogenannte Impulssperre erfolgen, bei der die für den Umrichter vorgesehene Steuerung die Ausgabe von Zündimpulsen unterbindet, also sperrt.

Weitere Merkmale und Vorteile der vorliegenden Erfindung werden deutlich anhand der nachfolgenden Beschreibung bevorzugter Ausführungsbeispiele unter Bezugnahme auf die beiliegenden Abbildungen. Darin zeigen:
- Fig. 1: ein Prinzipschaltbild einer erfindungsgemäßen Anordnung und
- Fig. 2: eine erfindungsgemäße Anordnung mit einer ersten Steuerungsarchitektur.

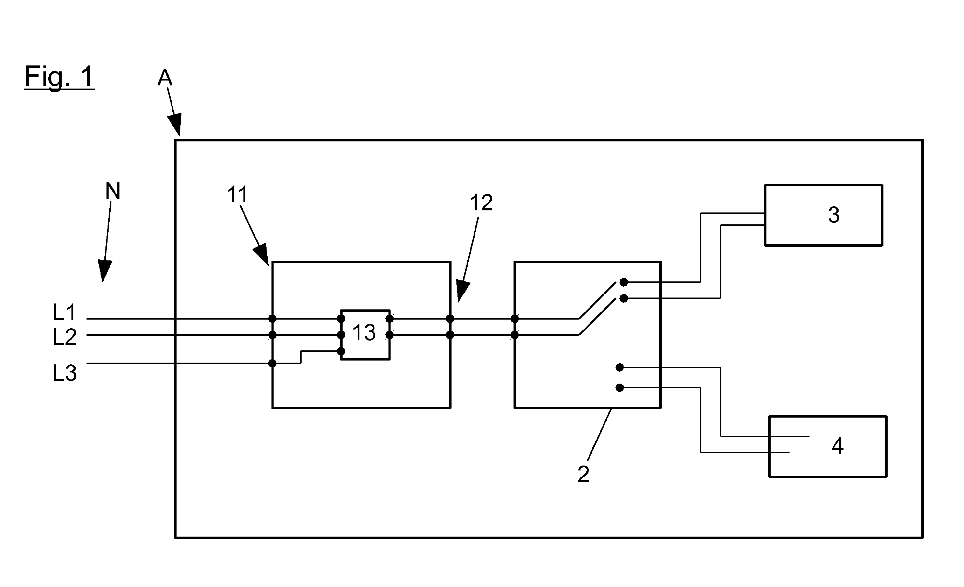

Die in der Figur 1 skizzierte erfindungsgemäße Anordnung A weist einen bidirektionalen Umrichter 1, eine Umschalteinrichtung 2, einen Batteriespeicher 3 als Energiespeichereinrichtung und einen Wärmeerzeuger 4 als Energiewandlereinrichtung auf.

Der Umrichter 1 hat drei erste Anschlüsse 11, über die der Umrichter mit an ein dreiphasiges Versorgungsnetz N angeschlossen ist. Die Außenleiter des Versorgungsnetzes sind mit L1, L2 und L3 bezeichnet.

Der Umrichter 1 hat ferner zwei zweite Anschlüsse 12, an denen eine Gleichspannung bereitgestellt werden kann oder eine Gleichspannung angelegt werden kann.

Außerdem hat der Umrichter 1 ein Leistungsteil 13 mit Leistungshalbleiterbauelementen. Das Leistungsteil 13 ist mit den ersten Anschlüssen 11 und mit den zweiten Anschlüssen 12 verbunden. Die Leistungshalbleiterbauelemente des Leistungsteils 13 sind so angeordnet und verbunden, das eine an den ersten Anschlüssen 11 anliegende dreiphasige Wechselspannung in eine an den zweiten Anschlüssen 12 anliegende Gleichspannung umgerichtet werden kann und eine an den zweiten Anschlüssen 12 anliegende Gleichspannung in eine an den ersten Anschlüssen 11 anliegende Wechselspannung umgerichtet werden kann.

Die Umschalteinrichtung 2 ist ein zweipoliger Umschalter, der die zweiten Anschlüsse 12 des Umrichters 1 entweder mit dem Batteriespeicher 3 oder mit dem Wärmeerzeuger 4 verbindet.

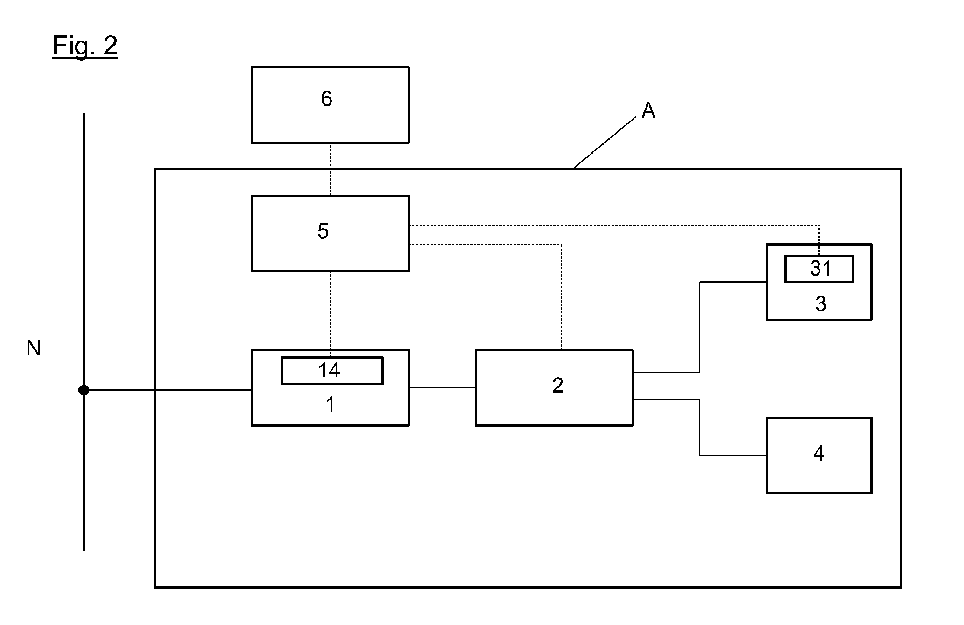

Die erfindungsgemäße Anordnung weist zumindest eine Steuerung auf. Die Steuerung kann eine zentrale Steuerung sein. Steuerungsfunktionen können aber auch durch die Kombination von dezentralen Steuerungen und einer zentralen Steuerung sowie ausschließlich durch dezentrale Steuerungen realisiert sein. Beispiele für diese Steuerungsarchitekturen sind in den Figuren 2, 3 und 4 angegeben.

Die Steuerung oder die Steuerungen steuern die Umschalteinrichtung 3 und den Umrichter 2 in abgestimmter Weise. So wird im Fall einer Entnahme von Energie aus dem Netz N der Umrichter so gesteuert, dass er Energie von den ersten Anschlüssen 11 zu den zweiten Anschlüssen 2 transportiert. Dabei arbeitet der Umrichter 2 im Gleichrichterbetrieb und richtet die Wechselspannung an den ersten Anschlüssen 11 in eine Gleichspannung an den zweiten Anschlüssen 12 um. Im Gleichrichterbetrieb des Umrichters 1 kann die Umschalteinrichtung 3 entweder den Batteriespeicher 3 oder den Wärmeerzeuger 4 mit den zweiten Anschlüssen 12 des Umrichters 2 verbinden.

Ob die Steuerung oder die Steuerungen die Umschalteinrichtung 2 so ansteuern, dass der Batteriespeicher 3 oder der Wärmeerzeuger 4 mit den zweiten Anschlüssen 12 verbunden ist, richtet sich nach dem Ladungszustand des Batteriespeichers 3. Ist der Batteriespeicher 3 vollgeladen, ist der Wärmeerzeuger 4 mit den zweiten Anschlüssen 12 verbunden. Ist der Batteriespeicher 3 nicht vollgeladen, ist der Batteriespeicher zum weiteren Laden mit den zweiten Anschlüssen 12 verbunden.

Wird der Umrichter 1 dagegen im Wechselrichterbetrieb und wird Energie in das Netz eingespeist, ist die Stellung der Schaltelemente der Umschalteinrichtung so, dass der Batteriespeicher 3 mit den zweiten Anschlüssen 12 verbunden ist.

Bei jedem Wechsel der Schaltstellung der Schaltelemente der Umschalteinrichtung 2 wird durch die Steuerung oder die Steuerungen das Leistungsteil 13 so geschaltet, dass kein Strom über die Leistungshalbleiterbauelemente von den ersten Anschlüssen 11 zu den zweiten Anschlüssen 12 fließt oder umgekehrt. Ist das der Fall, fließt auch über die Umschalteinrichtung 2 kein Strom. Die Umschalteinrichtung 2 kann dann stromlos geschaltet werden. Das macht es möglich, dass als Schaltelemente mechanische Schaltelemente wie Schütze verwendet werden, die preiswerter als Leistungshalbleiterschaltelement sein können.

Die schematische, einpolige Darstellung der Fig. 2 zeigt die Anordnung A mit dem Umrichter 1, der Umschalteinrichtung 2, der Energiespeichereinrichtung 3 und der Energiewandlereinrichtung 4, die in aus der Fig. 1 bekannten Art und Weise miteinander verbunden sind.

Sowohl der Umrichter 1 als auch die Energiespeichereinrichtung 3 weisen dezentrale Steuerungen 14 bzw. 31 auf, mit denen Funktionen des Umrichters 1 bzw. der Energiespeichereinrichtung 3 gesteuert und/oder geregelt werden können. Die dezentralen Steuerungen 14 bzw. 31 sind einer zentralen Steuerung 5 der Anordnung A untergeordnet, die den dezentralen Steuerungen 14, 31 insbesondere Führungsgrößen vorgibt und/oder Informationen aus den dezentralen Steuerungen 14, 31 bezieht. Bei diesen Informationen kann es sich um Messwerte, aus Messwerten berechnete oder geschätzte Größen handeln.

Außerdem ist mit der zentralen Steuerung 5 die Umschalteinrichtung 2 verbunden. Die Umschalteinrichtung 2 wird von der zentralen Steuerung unmittelbar gesteuert.

Die zentrale Steuerung 5 ist mit einer externen Steuerung 6 verbunden, über welche die Anordnung als Ganzes gesteuert und/oder geregelt werden kann.

Die zentrale Steuerung 5 kann mit einem Sensor (nicht dargestellt) verbunden sein, der die Frequenz des Netzes N überwacht. Aus den durch den Sensor ermittelten Frequenzabweichungen kann die zentrale Steuerung ermitteln, ob eine Primärregelleistung abgenommen oder zur Verfügung gestellt werden soll. Die zentrale Steuerung 5 kann die übrigen Komponenten der Anordnung 5 dann entsprechend steuern und/oder regeln. Die Anforderung zur Abnahme oder zum zur Verfügung stellen von Primärregelleistung kann aber auch von der externen Steuerung 6 kommen.

## Patentansprüche

1. Anordnung (A) zum Speichern von elektrischer Energie aus einem Versorgungsnetz, wobei die Anordnung
- einen Umrichter (1) zum Wandeln von Wechselspannung in Gleichspannung aufweist, wobei der Umrichter
- erste Anschlüsse (11) zur Verbindung des Umrichters (1) mit dem Versorgungsnetz (N),
- zweite Anschlüsse (12) zur Bereitstellung und/oder Anlegen von Gleichspannung und
- ein Leistungsteil (13) mit Leistungshalbleiterbauelementen, das elektrisch zwischen die ersten Anschlüsse und die zweiten Anschlüsse geschaltet ist,
aufweist, und die Anordnung weiter
- eine Energiespeichereinrichtung (3) zur Aufnahme von elektrischer Energie aufweist,
**dadurch gekennzeichnet, dass** die Anordnung außerdem
- eine Energiewandlereinrichtung (4), insbesondere einen Wärmeerzeuger (4), aufweist, der elektrische Energie in eine von elektrischer Energie verschiedene Energieform, insbesondere Wärmeenergie wandelt, und
- eine Umschalteinrichtung (2) aufweist, mit welcher entweder die Energiespeichereinrichtung (3) oder die Energiewandlereinrichtung (4) mit den zweiten Anschlüssen (12) des Umrichters (1) verbindbar ist.

2. Anordnung nach Anspruch 1, **dadurch gekennzeichnet, dass** mit der Energiewandlereinrichtung (4) auch Energie aus der anderen Energieform in elektrische Energie wandelbar ist.

3. Anordnung nach Anspruch 2, der mit Energiewandlereinrichtung (4) elektrische Energie schneller in eine andere Energieform wandelt als umgekehrt.

4. Anordnung nach einem der Ansprüche 1 bis 3, **dadurch gekennzeichnet, dass** die Energiewandlereinrichtung (4) in der Lage ist schneller elektrische Energie aufzunehmen als die Energiespeichereinrichtung (3).

5. Anordnung nach einem der Ansprüche 2 bis 4, **dadurch gekennzeichnet, dass** die Energiespeichereinrichtung (3) in der Lage ist schneller elektrische Energie abzugeben als die Energiewandlereinrichtung (4).

6. Anordnung nach einem der Ansprüche 1 bis 5, **dadurch gekennzeichnet, dass** die Umschalteinrichtung (2) ein oder mehrere Umschalter aufweist.

7. Anordnung nach einem der Ansprüche 1 bis 6, **dadurch gekennzeichnet, dass** die Anordnung (A) ein oder mehrere Mittel zur Überwachung der Netzfrequenz der an den ersten Anschlüssen anliegenden Netzspannung aufweist.

8. Anordnung nach einem der Ansprüche 1 bis 7, **dadurch gekennzeichnet, dass** die Anordnung eine zentrale Steuerung zum Steuern des Umrichters (1), der Umschalteinrichtung (2), der Energiespeichereinrichtung (3) und/oder der Energiewandlereinrichtung (4) aufweist.

9. Anordnung nach Anspruch 8, **dadurch gekennzeichnet, dass** die Anordnung dezentrale Steuerungen aufweist, die dem Umrichter (1), der Umschalteinrichtung (2), der Energiespeichereinrichtung (3) und/oder der Energiewandlereinrichtung (4) zugeordnet und der zentralen Steuerung nachgeordnet sind und zum Austausch von Informationen über Signalleitungen mit der zentralen Steuerung, dem Umrichter (1), der Umschalteinrichtung (2) und/oder der Energiespeichereinrichtung (3) verbunden sind.

10. Anordnung nach einem der Ansprüche 1 bis 9, **dadurch gekennzeichnet, dass** die Anordnung (A) dezentrale Steuerungen aufweist, die dem Umrichter (1), der Umschalteinrichtung (2), der Energiespeichereinrichtung (3) und/oder der Energiewandlereinrichtung (4) zugeordnet und zum Austausch von Informationen über Signalleitungen miteinander und mit dem Umrichter (1), der Umschalteinrichtung (2), der Energiespeichereinrichtung (3) und/oder der Energiewandlereinrichtung (4) verbunden sind.

11. Anordnung nach einem der Ansprüche 1 bis 10, **dadurch gekennzeichnet, dass** die Energiespeichereinrichtung (3) einen Akkumulator aufweist.

12. Anordnung nach einem der Ansprüche 1 bis 11, **dadurch gekennzeichnet, dass** die Energiewandlereinrichtung (4) einen Wärmeerzeuger oder einen Elektrolyseur aufweist.

13. Verfahren zum Betreiben einer Anordnung nach einem der Ansprüche 1 bis 12,
- bei dem das zumindest eine Mittel einen Zustand anzeigt, in dem die Netzfrequenz höher oder niedriger als eine Nennfrequenz ist, oder bei dem über eine Schnittstelle die Anordnung zum Einspeisen von elektrischer Energie in das Netz oder zum Entnehmen elektrischer Energie aus dem Netz angewiesen wird,
- wobei bei einer Netzfrequenz höher als der Nennfrequenz oder bei einer Anweisung zum Entnehmen elektrischer Energie der Umrichter (1) in einen Gleichrichterbetrieb gebracht wird, in dem Energie von den ersten Anschlüssen (11) zu den zweiten Anschlüssen (12) des Umrichters (1) transportiert wird,
- wobei im Gleichrichterbetrieb des Umrichters (1) bei einem Ladezustand des Speichers (3) unterhalb eines Neutralzustands die zu den zweiten Anschlüssen (12) transportierte Energie in der Energiespeichereinrichtung (3) aufgenommen wird,
**dadurch gekennzeichnet, dass**
- im Gleichrichterbetrieb des Umrichters (1) bei Erreichen des Neutralzustands der Energiespeichereinrichtung (3) die Umschalteinrichtung (2) die zweiten Anschlüsse (12) des Umrichters (1) von der Energiespeichereinrichtung (3) trennt und mit der Energiewandlereinrichtung (4) verbindet und/oder
- falls die zweiten Anschlüsse (12) mit der Energiewandlereinrichtung (4) verbunden sind, die Umschalteinrichtung (2) bei einem Übergang des Umrichters (1) vom Gleichrichterbetrieb in den Wechselrichterbetrieb die zweiten Anschlüsse (12) des Umrichters (1) von der Energiewandlereinrichtung (4) trennt und mit der Energiespeichereinrichtung (3) verbindet.

14. Verfahren nach Anspruch 13, **dadurch gekennzeichnet, dass** im Gleichrichterbetrieb nach dem Erreichen des Neutralzustandes der Energiespeichereinrichtung (3) und vor dem Trennen der zweiten Anschlüsse (12) des Umrichters (1) von der Energiespeichereinrichtung (3) und dem Verbinden der zweiten Anschlüsse (12) des Umrichters (1) mit der Energiewandlereinrichtung (4) ein Stromfluss durch die Leistungshalbleiterbauelemente unterbrochen wird, um die Umschalteinrichtung (2) stromlos zu schalten.

15. Verfahren nach Anspruch 13 oder 14, **dadurch gekennzeichnet, dass** beim Übergang des Umrichters (1) vom Gleichrichterbetrieb in den Wechselrichterbetrieb vor dem Trennen der zweiten Anschlüsse (12) des Umrichters (1) von der Energiewandlereinrichtung (4) und dem Verbinden der zweiten Anschlüsse (12) des Umrichters (1) mit der Energiespeichereinrichtung (3) ein Stromfluss durch die Leistungshalbleiterbauelemente unterbrochen wird, um die Umschalteinrichtung (2) stromlos zu schalten.
